# EUROPEAN PATENT SPECIFICATION

(11) **EP 2 856 611 B1**
(45) Date of publication and mention of the grant of the patent: **07.11.2018**
(21) Application number: 13726848.8
(22) Date of filing: 31.05.2013
(51) Int. Cl.: H02K 1/28, H02K 1/02, H02K 1/27

(54) **ROTOR**
ROTOR
ROTOR

(30) Priority: 01.06.2012 GB 201209833
(43) Date of publication of application: 08.04.2015
(73) Proprietor: Crompton Technology Group Ltd., Banbury, Oxfordshire OX16 4SU (GB)
(72) Inventor: GIDDINGS, Peter Francis, Swindon Wiltshire SN6 7NU (GB); HENRY, Nicholas John, Northants Northamptonshire NN1 3RR (GB); DRAKELEY, Jon, Leamington Spa Warwickshire CV31 2TH (GB)
(74) Representative: Dehns
(86) International application number: PCT/GB2013/051461
(87) International publication number: WO 2013/179059

(56) References cited:
- CN-U- 201 994 746
- DE-A1-102007 012 822
- JP-A- H0 919 093
- JP-A- S61 207 162
- US-A1- 2003 193 255

## Description

This invention relates to a rotor for an electromechanical device.

Electromechanical devices, such as motors, generators and actuators, include rotating elements or rotors which may include magnets. In high speed applications, it is known to hold rare earth element magnets onto a metallic material hub element (such as steel or titanium) using a carbon fibre composite retention sleeve that is disposed over the magnets. A further shaft element may be coupled to the hub to transmit torque from or to the electromechanical device. The high tensile strength and stiffness of a carbon fibre composite magnet retention sleeve allows such an arrangement to retain magnets even during high rotational velocity operation without failure. Furthermore, the low density of carbon fibre minimises the weight penalty of the magnet retention sleeve.

Carbon fibre retention sleeves have been applied by directly wrapping carbon fibre composites onto metal rotor components, or by pressing preformed carbon fibre composites over metal rotors in a secondary operation.

Due to the high magnetic field present in such electromechanical devices, the rotation of the rotor results in eddy currents in the metal hub, resulting in mechanical losses and reduced efficiency. The isotropic nature of the metal materials of the hub limits design freedom in optimising its structure for minimum weight and inertia. Likewise, the use of carbon fibres in the retention sleeve surrounding the magnets can result in similar losses. The presence of the retention sleeve further results in the spacing of the magnets from the associated stator being increased which is undesirable.

The applicant has thus identified that this arrangement of a metal hub element with a rare earth magnet and a carbon fibre composite retaining sleeve may be substantially improved. It is an object of the invention to provide a rotor in which at least some of the disadvantages associated with known arrangements are overcome or are of reduced effect.

US 20013/0193255 discloses a rotor structure for an electric motor which includes a cylindrical rotor core assembly and a plurality of permanent magnets disposed on an outer circumference of the rotor core assembly. Wrapped around the rotor core assembly is a bandage to secure the magnets in place, wherein the bandage has a bandage edge in proximity of an end surface of the rotor core assembly.

According to a first aspect of the invention there is provided a rotor comprising a magnet and a magnet retaining element located, at least in part, radially outward of the magnet relative to a rotor axis, the magnet retaining element comprising a first anchoring rib and a second anchoring rib located axially adjacent opposing ends of the magnet and a sleeve section extending over the magnet and between the ribs, the sleeve section comprising a fibre reinforced composite material, the fibres of which extend in a lengthwise direction of the rotor, wherein each rib is formed over the sleeve section, thereby fully anchoring each end of the sleeve section, and wherein the fibres of the ribs are substantially circumferentially oriented.

The use of fibres extending in the lengthwise direction to secure the magnet against outward movement is advantageous in that a relatively thin layer of material can be used to provide the required support for the magnet, thereby minimising the negative impact of the presence of this material upon the operation of a device of which the rotor forms part.

The fibres of the sleeve section may conveniently be of a non-conductive material, for example they may be glass fibres, aramid fibres or ultra high molecular weight polymer fibres. As a result, the generation of eddy currents, and the negative impacts thereof, can be avoided. The fibres of the sleeve section are conveniently oriented at an angle of up to 25 degrees to the axis of the rotor.

Each rib is conveniently formed over the sleeve section, thereby fully anchoring each end of the sleeve section. The fibres of the ribs are substantially circumferentially oriented. The fibres of the ribs may conveniently be carbon fibres.

The rotor may further comprise shoulders that together define a channel within which the magnet is disposed. The fibres of the sleeve section preferably extend over the shoulders.

The rotor may further comprise a hub component upon which the magnet is mounted. The hub component may be mounted upon or form part of a rotor shaft.

The rotor shaft and the magnet retaining element may be of fibre reinforced composite material and may be formed integrally with one another.

The provision of a composite rotor in this manner allows strength .and stiffness of the rotor to be maintained whilst allowing weight reductions to be made.

The orientation of the fibres of the magnet retaining element may conveniently differ from the orientation of the fibres of the rotor shaft.

Preferably, the magnet retaining element comprises non-conductive, nonmagnetic fibres in areas of high magnetic flux density, and carbon fibres in areas of low magnetic flux density.

In any of the arrangements set out hereinbefore, the magnet may comprise a magnetically loaded fibre reinforced composite. The loading may be achieved using magnetic material particles, foils of magnetic materials, or by any other suitable technique.

The invention will further be described, by way of example, with reference to the accompanying drawings, in which:
Figure 1 is an exploded diagram of a known rotor;
Figure 2 is a perspective view, partly in section, illustrating a rotor in accordance with an embodiment of the invention;
Figure 3 is a view of part of the rotor of Figure 2;
Figure 4 is a diagrammatic sectional view illustrating another embodiment; and
Figure 5 is a view similar to Figure 2 illustrating a further embodiment.

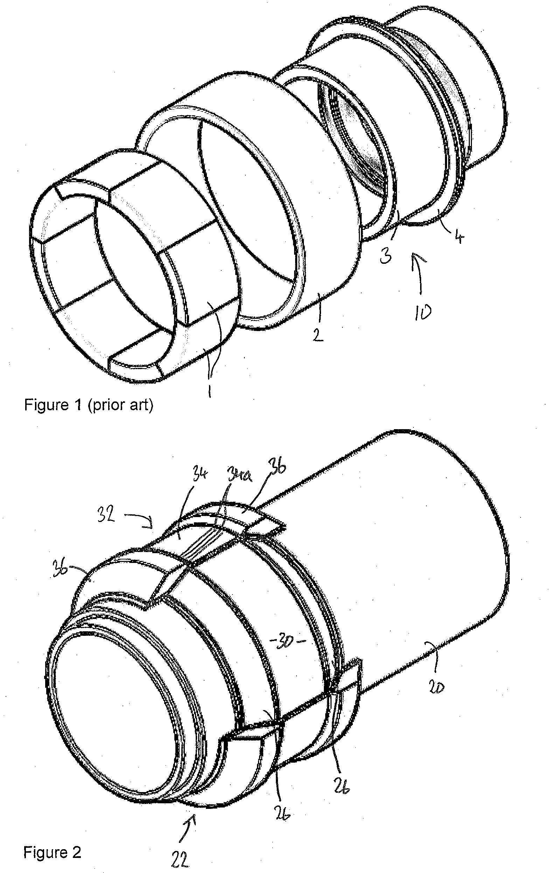

Referring first to Figure 1 , a rotor 10 for an electromechanical device is shown. The rotor 10 comprises a metallic hub element 3 adapted to be secured to a rotor shaft (not shown), a plurality of separate magnets 1 , and a carbon fibre composite sleeve element 2. In use, the magnets 1 are disposed on the outer surface of the hub element 3, adjacent to a retaining lip 4 thereof. The magnets 1 are secured against centripetal force arising from rotation of the rotor 10 by the sleeve element 2, which in use is secured over the magnets 1.

Due to their dissimilar materials, the hub element 3, magnets 1 and sleeve 2 are manufactured separately and subsequently assembled to form the completed rotor. In
high speed applications, for example in aerospace applications, materials with high strength and stiffness are used. The metallic hub element 3 may, for instance, comprise steel or titanium. The high strength and low weight of the carbon fibre sleeve element 2 provides adequate strength and stiffness to retain the magnets 1 during high speed operation with minimal penalties in mass and rotational inertia. The element 2 may be prefabricated and positioned over the magnets 1 during the assembly process. Alternatively, it may be formed in position by the wet winding of carbon fibres over the magnets 1 and subsequent curing, or allowing to cure, of the resin provided upon the fibres. In such an arrangement, it will be appreciated that the fibres are wound around the circumference of the assembly comprising the hub 3 and the magnets 1.

High magnetic field strengths are typically used in electromechanical devices. For example in an electrical motor a magnetic field produced by windings is used to drive rotation of the rotor. The high conductivity of the metal hub 3 in combination with the magnetic field means that such rotation induces eddy currents in the hub 3 which result in losses that reduce device efficiency. Since carbon fibres are electrically conductive, eddy currents may similarly be induced in the material of the sleeve 2, further decreasing drive efficiency.

Furthermore, the optimisation of the hub structure for low mass, low inertia and torsional and axial stiffness is compromised by the isotropic mechanical properties and relatively high density of metal materials. This leads to a heavier and higher inertia designs than can be obtained according to embodiment of the present invention.

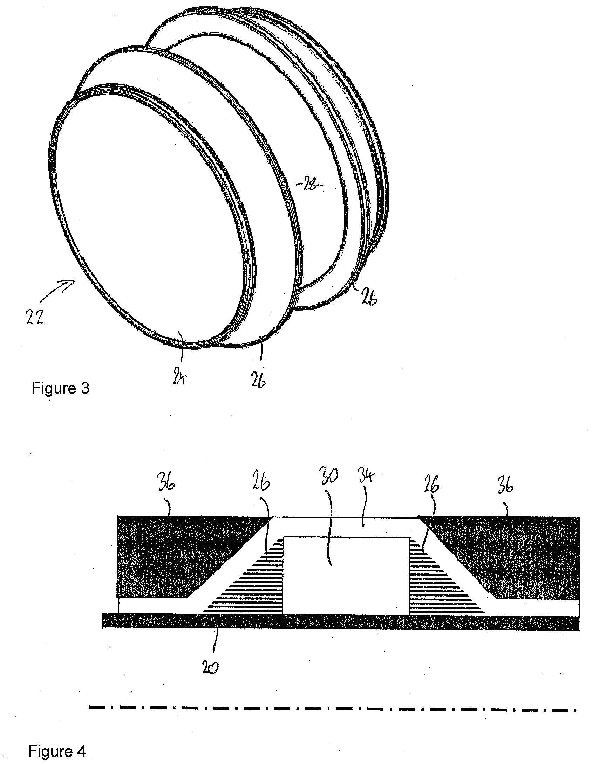

Referring next to Figure 2, a rotor in accordance with one embodiment of the invention is illustrated. The rotor shown in Figure 2 comprises a rotor shaft 20 upon which is mounted a hub component 22 (see Figure 3). The rotor shaft 20 may, for example, be of metallic construction, but this need not always be the case and arrangements in which the shaft 20 is of, for example, composite construction are possible. Indeed the use of composite materials may be thought to be advantageous as they may allow weight savings to be made whilst maintaining a shaft of good strength and stiffness.

The hub component 22 comprises an inner sleeve 24 which bears against the outer surface of the shaft 20, in use. Integrally formed with the inner sleeve 24 are a pair of shoulders 26. The shoulders 26 are spaced apart from one another and define therebetween a channel 28 within which magnets 30 are located. In this example, the magnets 30 are of the rare-earth form, but other magnets could be used.

The magnets 30 are secured in position by a magnet retaining element 32 which serves to resist outward movement of the magnets 30, in use. The magnet retaining element 32 comprises a sleeve section 34 which extends over the magnets 30. The sleeve section 34 comprises a fibre reinforced composite material, the fibres 34a of which extend lengthwise of the rotor shaft 20. Conveniently, the fibres 34a of the sleeve section are wound onto the hub component 22, after positioning of the magnets 30 onto the hub component 22. In order to wind the fibres 34a onto the hub component 22, they must be angled to the axis of the hub component 22 and shaft 20, but the angle therebetween is preferably small. By way of example, it is conveniently less than 25°. However, other angles may be used without departing from the scope of the invention.

The shoulders 26 serve to axially locate the magnets 30 during the assembly process. In addition, as shown, the shoulders 26 are of ramped form and serve to reduce the angle through which the fibres 34a must bend as they pass over the ends of the magnets 30.

The magnet retaining element 32 further comprises first and second anchoring ribs 36 located adjacent opposite axial ends of the magnets 30 and serving to anchor the fibres 34a of the sleeve section 34. Each rib 36 is of fibre reinforced composite form, the fibres of which are circumferentially wound. It will be appreciated that once the resin of the composite material or materials forming the magnet retaining element 32 have cured, the sleeve section 34 and ribs 36 will be integral with one another, and the ribs 36 will serve to anchor the fibres 34a of the sleeve section in position. The fibres 34a of the sleeve section 34 will act, in use, in a manner similar to a beam, anchoring the magnets 30 in position against the forces urging the magnets 30 to move radially, in use.

Conveniently, the fibres 34a are of glass fibre or other non-conductive material form. As a result, the formation of eddy currents and associated losses therein are reduced. The fibres forming the ribs 36 are conveniently of carbon form. The use of carbon fibres in the ribs 36 is advantageous in that, compared to glass fibres, carbon fibres are of enhanced strength.

The substantially axially extending fibres 34a are also thought to be beneficial as they will efficiently transfer torque between the magnets 30 and the remainder of the rotor. It is thought that in traditional arrangements, slight radial movement of the magnets can result in the transmission of torque between the magnets and the remainder of the rotor being impaired.

Whilst conventional rare earth magnets are mentioned hereinbefore, it will be appreciated that the magnets could take a range of other forms. By way of example, if desired the magnets could be of composite form, comprising reinforcing fibres and a resin material doped with particles or foils of a suitable magnetic material. With such arrangements, after curing of the resin, the particles or foils are suitably magnetised to form the required poles. Magnets of this type are well known and so will not be described herein in further detail.

In the arrangement described hereinbefore, the hub component 22 is mounted upon and secured to a suitable rotor shaft 20. It will be appreciated, however, that depending upon the material of the rotor shaft 20, the rotor shaft and hub component 22 may be formed integrally with one another. A further alternative is shown in Figure 4 in which the shoulders 26 are formed directly upon the rotor shaft 20, the inner sleeve 24 of the hub component 22 being formed by the rotor shaft 20. In this arrangement, the shoulders 26 may be of any suitable material, for example suitable polymer foam could be used.

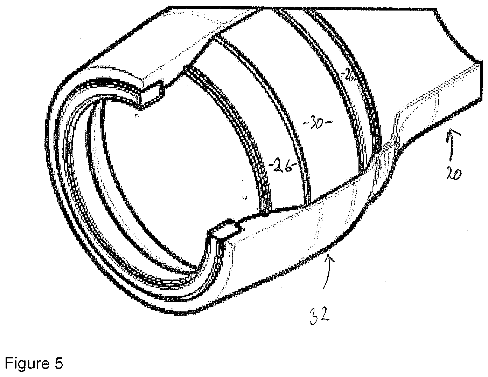

A further alternative, as shown in Figure 5, comprises a rotor shaft 20 integrally formed with the magnet retaining element 32 to form a composite rotor. In this arrangement, as with the arrangements described hereinbefore, the magnet retaining element 32 conveniently incorporates fibres which extend in the lengthwise direction of the rotor and which serve to retain the magnets 30 against outward radial movement. These fibres may be of glass form. However, other arrangements are possible. For example, the magnet retaining element 32 may include just circumferentially wound fibres, not ones extending in the lengthwise direction. The ribs 36 of this arrangement may be incorporated into and form part of the shaft 20. As illustrated, the shaft 20 may incorporate features supporting bearings or the like.

Whilst several specific embodiments of the invention have been described hereinbefore, it will be appreciated that a wide range of modifications and alterations may be made thereto without departing from the scope of the invention as defined in the appended claims.

## Claims

1. A rotor comprising a magnet (30) and a magnet retaining element (32) located, at least in part, radially outward of the magnet relative to a rotor axis, the magnet retaining element comprising a first anchoring rib (36) and a second anchoring rib (36), the ribs being made of fibre reinforced material and located axially adjacent opposing ends of the magnet, and a sleeve section (34) extending over the magnet and between the ribs, the sleeve section comprising a fibre reinforced composite material, the fibres (34a) of which extend in a lengthwise direction of the rotor,
wherein each rib (36) is formed over the sleeve section (34), thereby fully anchoring each end of the sleeve section (34), and
wherein the fibres of the ribs (36) are substantially circumferentially oriented.

2. A rotor according to Claim 1, wherein the fibres (34a) of the sleeve section (34) are of a non-conductive material.

3. A rotor according to Claim 2, wherein the fibres (34a) of the sleeve section (34) are glass fibres, aramid fibres or ultra high molecular weight polymer fibres.

4. A rotor according to any of the preceding claims, wherein the fibres of the ribs (36) are carbon fibres.

5. A rotor according to any of the preceding claims, wherein the fibres (34a) of the sleeve section (34) are oriented at an angle of up to 25 degrees to the axis of the rotor.

6. A rotor according to any of the preceding claims, further comprising shoulders (26) that together define a channel (28) within which the magnet (40) is disposed.

7. A rotor according to Claim 6, wherein the fibres (34a) of the sleeve section (34) extend over the shoulders (26).

8. A rotor according to any of the preceding claims, further comprising a hub component (22) upon which the magnet is mounted.

## Patentansprüche

1. Rotor, der einen Magneten (30) und ein Magnetrückhalteelement (32) umfasst, das zumindest teilweise radial nach außen von dem Magneten bezüglich einer Rotorachse positioniert ist, wobei das Magnetrückhalteelement eine erste Verankerungsrippe (36) und eine zweite Verankerungsrippe (36) umfasst, wobei die Rippen aus faserverstärktem Material hergestellt sind und axial benachbart zu gegenüberliegenden Enden des Magneten gelegen sind, und wobei sich ein Hülsenabschnitt (34) über den Magneten und zwischen den Rippen erstreckt, wobei der Hülsenabschnitt einen faserverstärkten Verbundwerkstoff aufweist, dessen Fasern (34a) sich in Längsrichtung des Rotors erstrecken,
wobei jede Rippe (36) über dem Hülsenabschnitt (34) gebildet ist, wodurch sie jedes Ende des Hülsenabschnitts (34) vollständig verankern, und
wobei die Fasern der Rippen (36) im Wesentlichen in Umfangsrichtung ausgerichtet sind.

2. Rotor nach Anspruch 1, wobei die Fasern (34a) des Hülsenabschnitts (34) aus einem nicht leitenden Material sind.

3. Rotor nach Anspruch 2, wobei die Fasern (34a) des Hülsenabschnitts (34) Glasfasern, Aramidfasern oder Polymerfasern mit ultrahoher molarer Masse sind.

4. Rotor nach einem der vorhergehenden Ansprüche, wobei die Fasern der Rippen (36) Kohlenstofffasern sind.

5. Rotor nach einem der vorhergehenden Ansprüche, wobei die Fasern (34a) des Hülsenabschnitts (34) in einem Winkel von bis zu 25 Grad zu der Rotorachse ausgerichtet sind.

6. Rotor nach einem der vorhergehenden Ansprüche, der ferner Absätze (26) umfasst, die zusammen einen Kanal (28) definieren, innerhalb dessen der Magnet (40) angeordnet ist.

7. Rotor nach Anspruch 6, wobei die Fasern (34a) des Hülsenabschnitts (34) sich über die Absätze (26) erstrecken.

8. Rotor nach einem der vorhergehenden Ansprüche, wobei ferner eine Nabenkomponente (22) umfasst ist, auf der der Magnet angebracht ist.

## Revendications

1. Rotor comprenant un aimant (30) et un élément de retenue d'aimant (32) situé, au moins en partie, radialement à l'extérieur de l'aimant par rapport à un axe du rotor, l'élément de retenue d'aimant comprenant une première nervure d'ancrage (36) et une seconde nervure d'ancrage (36), les nervures étant fabriquées en matériau renforcé par des fibres et situées de façon axialement adjacente à des extrémités opposées de l'aimant, et une section de manchon (34) s'étendant au-dessus de l'aimant et entre les nervures, la section de manchon comprenant un matériau composite renforcé par des fibres, dont les fibres (34a) s'étendent dans une direction longitudinale du rotor,
dans lequel chaque nervure (36) est formée au-dessus de la section de manchon (34), de façon à ancrer totalement chaque extrémité de la section de manchon (34), et
dans lequel les fibres des nervures (36) sont orientées de façon sensiblement circonférentielle .

2. Rotor selon la revendication 1, dans lequel les fibres (34a) de la section de manchon (34) sont en un matériau non conducteur.

3. Rotor selon la revendication 2, dans lequel les fibres (34a) de la section de manchon (34) sont des fibres de verre, des fibres d'aramide ou des fibres d'un polymère à poids moléculaire ultra élevé.

4. Rotor selon l'une quelconque des revendications précédentes, dans lequel les fibres des nervures (36) sont des fibres de carbone.

5. Rotor selon l'une quelconque des revendications précédentes, dans lequel les fibres (34a) de la section de manchon (34) sont orientées à un angle allant jusqu'à 25 degrés par rapport à l'axe du rotor.

6. Rotor selon l'une quelconque des revendications précédentes, comprenant en outre des épaulements (26) qui définissent ensemble une gorge (28) dans laquelle l'aimant (40) est disposé.

7. Rotor selon la revendication 6, dans lequel les fibres (34a) de la section de manchon (34) s'étendent au-dessus des épaulements (26).

8. Rotor selon l'une quelconque des revendications précédentes, comprenant en outre un composant formant moyeu (22) sur lequel l'aimant est monté.
